# EUROPEAN PATENT APPLICATION

(11) **EP 3 113 100 A1**
(43) Date of publication of application: **04.01.2017**
(21) Application number: 15755194.6
(22) Date of filing: 24.02.2015
(51) Int. Cl.: G06Q 30/02, G06F 13/00, G06Q 50/04

(54) **SAFETY MANAGEMENT SYSTEM, COMMUNICATION TERMINAL, AND PROGRAM STORAGE MEDIUM**

(30) Priority: 26.02.2014 JP 2014035109
(71) Applicant: Watanabe, Yoshiaki, Tokyo 173-0024 (JP); Watanabe, Kinyo, Saitama-shi, Saitama 336-0042 (JP)
(72) Inventor: WATANABE, Yoshiaki, Tokyo 173-0024 (JP)
(74) Representative: Hirsch & Associés
(86) International application number: PCT/JP2015/055151
(87) International publication number: WO 2015/129665

(57) **Abstract**

To provide a safety management system capable of appropriately delivering, to a user, a variety of safety information necessary for a product to be safely used and preserved, etc. An address acquisition unit of a communication terminal acquires a web address corresponding to a product by optically reading the recognition code of the product. An information processing unit of the communication terminal accesses an information provision server by using the web address and acquires safety information. An information storage unit of the information provision server stores multiple kinds of safety information about each product, the information provision server appropriately selecting, on the basis of a prescribed selection criterion, any safety information from among the plurality of safety information pertaining to the product, and transmitting the selected safety information to the communication terminal.

## Description

### Technical Field

The present invention relates to a safety management system, a communication terminal and a program storage medium that provide safety information with which consumers and the like safely, for example, use and store products such as food and industrial products.

### Background Art

As a system for ensuring the safety of an industrial product or the like, for example, a system is known that notifies information on a recall by a producer to a communication terminal of a user (for example, a consumer) of the industrial product or the like.

For example, in patent document 1 described below, when a producer performs a recall for its own product, recall information is transmitted to a management server, and the management server is made to store the recall information. On the other hand, in a communication terminal (here, a personal computer) of a user, an information table is formed from products owned by the user and is stored. Then, the communication terminal receives the recall information from the management server, compares it with the information table and thereby checks whether or not recall information is present for the own products (see paragraphs [0021] and [0022], Fig. 1 and the like in patent document 1).

With the system of patent document 1, a consumer or the like easily knows that an industrial product or the like owned by the consumer or the like is recalled.

### Related Art Document

### Patent Document

Patent document 1: Japanese Unexamined Patent Application Publication No. 2008-152325

### Disclosure of the Invention

### Problems to be Solved by the Invention

In order for a consumer or the like to safely use a product such as an industrial product, it is necessary not only to check recall information but also to exercise various cautions.

However, since in general, a consumer owns and uses various types of industrial products and the like, it is difficult to exercise appropriate cautions on all of them. Although cautions for safety are often described in instruction manuals and the like for industrial products, there are a large number of users who do not read instruction manuals and a large number of users who lose instruction manuals. Furthermore, it is likely that since an industrial product or the like is obtained as the used product, its instruction manual is not attached thereto.

An object of the present invention is to provide a safety management system, a communication terminal and a program storage medium that can appropriately distribute, to users, various types of safety information for safely using and storing products.

### Means for Solving the Problem

A safety management system according to the present invention includes: an information providing server which provides safety information for safely utilizing a product; and a communication terminal which allows a user of the product to browse the safety information, where the communication terminal includes: an address acquisition portion which optically reads a recognition code for the product so as to acquire a web address corresponding to the product; an information acquisition portion which accesses the information providing server with the web address so as to acquire the safety information; and a display control portion which displays the safety information on a display portion, and the information providing server includes: an information storage portion which stores a plurality of types of the safety information; and an information providing portion which selects, based on predetermined selection criteria, any of the types of the safety information stored in the information storage portion and which provides the safety information to the communication terminal.

Preferably, in the safety management system of the present invention, the selection criteria include at least a criterion which is determined according to a time elapsed until the life of the product is exceeded.

Preferably, in the safety management system of the present invention, the safety information includes information indicating the expiration of the life of the product or an advance notice thereof.

Preferably, in the safety management system of the present invention, the safety information includes information indicating a time for the replacement of a component of the product, a time for the inspection thereof or an advance notice thereof.

A communication terminal according to the present invention allows safety information for safely utilizing a product to be browsed by a user of the product, and the communication terminal includes: an address acquisition portion which optically reads a recognition code for the product so as to acquire a web address corresponding to the product; an information acquisition portion which accesses an information providing server with the web address so as to acquire the safety information; and a display control portion which displays the safety information on a display portion, where the safety information is selected based on predetermined selection criteria.

Preferably, in the communication terminal of the present invention, the selection criteria include at least a criterion which is determined according to a time elapsed until the life of the product is exceeded.

Preferably, in the communication terminal of the present invention, the safety information includes information indicating the expiration of the life of the product or an advance notice thereof.

Preferably, in the communication terminal of the present invention, the safety information includes information indicating a time for the replacement of a component of the product, a time for the inspection thereof or an advance notice thereof.

A program storage medium according to the present invention is a computer-readable program storage medium in which a computer program that allows safety information for safely utilizing a product to be browsed with a communication terminal by a user of the product is stored, where the computer program makes the computer execute: address acquisition processing which makes the communication terminal optically read a recognition code for the product so as to acquire a web address corresponding to the product; information acquisition processing which makes the communication terminal access an information providing server with the web address so as to acquire the safety information; and display control processing which displays the safety information on a display portion of the communication terminal, and the safety information is selected based on predetermined selection criteria.

Preferably, in the program storage medium of the present invention, the selection criteria include at least a criterion which is determined according to a time elapsed until the life of the product is exceeded.

Preferably, in the program storage medium of the present invention, the safety information includes information indicating the expiration of the life of the product or an advance notice thereof.

Preferably, in the program storage medium of the present invention, the safety information includes information indicating a time for the replacement of a component of the product, a time for the inspection thereof or an advance notice thereof.

### Effects of the Invention

In the present invention, since the safety information provided from the information providing server to the communication terminal is selected according to the predetermined selection criteria, it is possible to appropriately provide the safety information to the user. Moreover, since the recognition code is used to access the information providing server, and thus it is possible to acquire the safety information, the user can easily acquire the safety information.

In the present invention, the safety information provided to the communication terminal is selected with consideration given to the time elapsed until the life of the product is exceeded, and thus the appropriate safety information can be provided to the user with appropriate timing.

In the present invention, as the safety information, information on the expiration of the life of the product or on the advance notice thereof is provided, and thus it is possible to avoid a danger that the product whose life is exceeded is used.

In the present invention, as the safety information, information on the time for the replacement of a component of the product, the time for the inspection thereof or the advance notice thereof is provided, and thus it is possible to avoid a danger and performance degradation caused by failing to notice that the life of a replacement component is exceeded and failing to inspect the product.

### Brief Description of Drawings

[Fig. 1] A conceptual diagram schematically showing the overall configuration of a safety management system according to a first embodiment of the present invention;
[Fig. 2] A conceptual perspective diagram showing the appearance of a product which is managed by the safety management system according to the first embodiment;
[Fig. 3] A conceptual diagram showing an example of the display of safety information in the safety management system according to the first embodiment;
[Fig. 4] A conceptual diagram showing an example of the display of the safety information in the safety management system according to the first embodiment;
[Fig. 5] A conceptual diagram showing an example of the display of the safety information in the safety management system according to the first embodiment;
[Fig. 6] A conceptual diagram showing an example of the display of the safety information in the safety management system according to the first embodiment; and
[Fig. 7] A conceptual diagram showing an example of the display of the safety information in the safety management system according to the first embodiment.

### Best Mode for Carrying Out the Invention

### [First embodiment of the present invention]

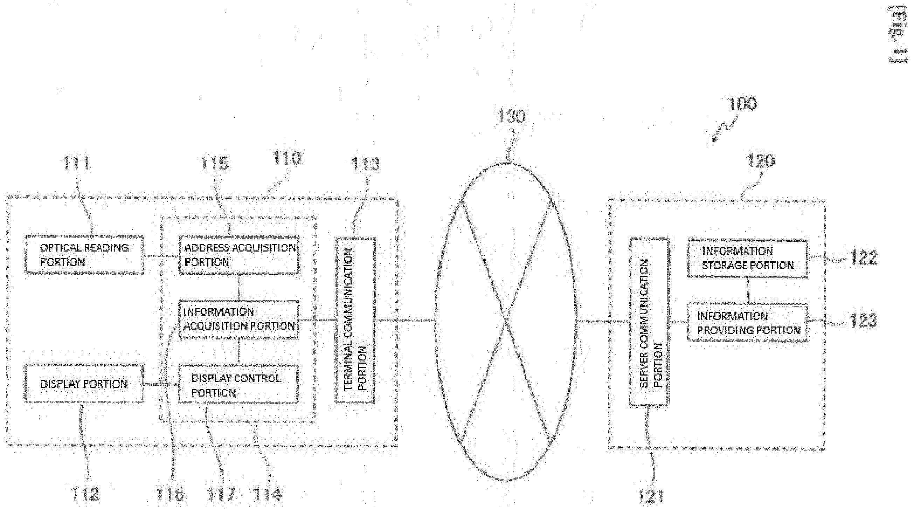

A first embodiment of the present invention will be described below with reference to Figs. 1 to 7.

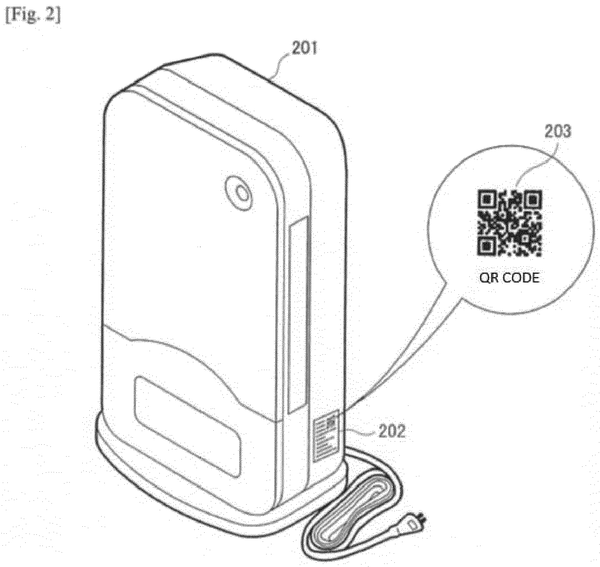

As shown in Fig. 1, a safety management system 100 according to the first embodiment includes a communication terminal 110 and an information providing server 120. Through the Internet 130, safety information (see Figs. 2 to 7 which will be described later) on a product is provided from the information providing server 120 to the communication terminal 110. Examples of the product include industrial products, processed food products, agricultural and marine products and buildings, and other products may be used. In the first embodiment, as an example of the product, an electric appliance 201 (heating deodorizer) as shown in Fig. 2 is used.

In Fig. 1, the communication terminal 110 is used by a user of the electric appliance 201. As the communication terminal 110, for example, a cell phone, a smart phone, a tablet terminal, a personal computer or the like can be used. The communication terminal 110 includes an optical reading portion 111, a display portion 112, a terminal communication portion 113 and a computation processing portion 114.

The optical reading portion 111 optically reads the recognition code 203 (see Fig. 2) of the electric appliance 201. Although as the optical reading portion 111, for example, the internal camera of a cell phone or the like can be used, an external reading device may be used. Although as the recognition code 203, any code may be used as long as it is characters, symbols or the like which can be optically read, in the first embodiment, a QR code (registered trademark) is used. In the first embodiment, the recognition code 203 includes at least information on the web address of the information providing server 120. Although in the first embodiment, a product display label 202 on which the recognition code 203 is printed is stuck to the side surface of the electric appliance 201, for example, the product display label 202 may be directly printed on the electric appliance 201 or the like or may be, for example, printed or stuck on the packaging, the storage box or the like of the electric appliance 201 or the like.

The display portion 112 displays safety information or the like. Although as the display portion 112, for example, the internal display of a cell phone or the like can be used, an external display device may be used. The details of the display of the display portion 112 can be downloaded as necessary and be printed.

The terminal communication portion 113 accesses the information providing server 120 through the Internet 130, and performs communication for acquiring the safety information from the information providing server 120.

The computation processing portion 114 executes application programs for safety management to construct an address acquisition portion 115, an information processing portion 116, a display control portion 117 and the like by software. The portions 115 to 117 may be constructed by hardware.

The address acquisition portion 115 controls the optical reading portion 111, and thus the recognition code 203 of the electric appliance 201 is optically read. In this way, the address acquisition portion 115 can acquire a web address for acquiring safety information on the electric appliance 201.

The information acquisition portion 116 controls the terminal communication portion 113 to access the information providing server 120 with the web address, and thereby acquires the safety information from the information providing server 120. As the procedure of the communication, a known communication protocol can be used, and thus the description thereof will be omitted.

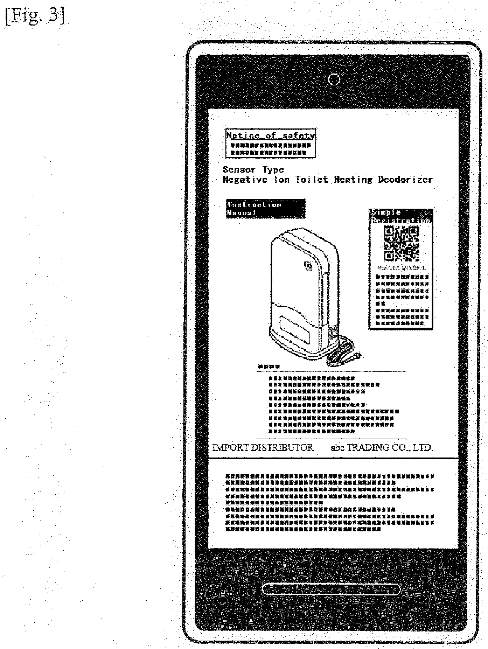

The display control portion 117 receives the safety information from the information providing portion 116. Then, the display control portion 117 controls the display portion 112 to display the safety information (see Figs. 3 to 7 which will be described later).

Although Fig. 1 shows only one communication terminal 110, the safety management system 100 of the first embodiment can include a plurality of communication terminals 110.

In Fig. 1, the information providing server 120 may be operated by the operator of safety information provision service or may be operated by a producer itself. The information providing server 120 includes a server communication portion 121, an information storage portion 122 and an information providing portion 123.

When the server communication portion 121 is accessed by the communication terminal 110 through the Internet 130, the server communication portion 121 performs communication for providing safety information to the communication terminal 110.

The information storage portion 122 stores a plurality of types of safety information.

The information providing portion 123 selects, according to predetermined selection criteria, any type of the safety information stored in the information storage portion 122. Then, the information providing portion 123 transmits the selected safety information to the communication terminal 110 through the server communication portion 121.

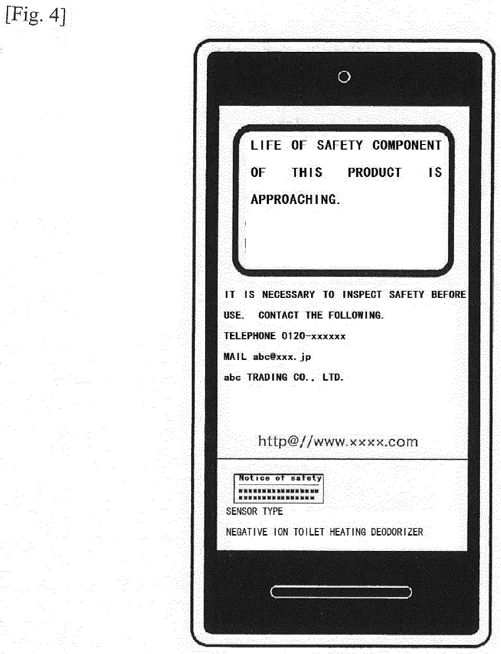

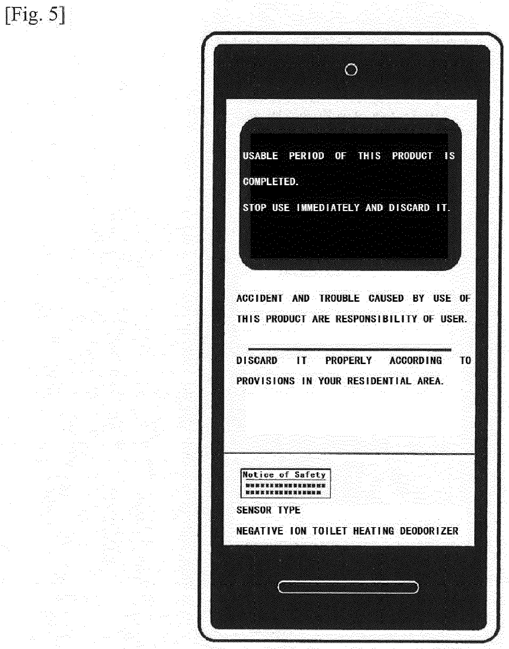

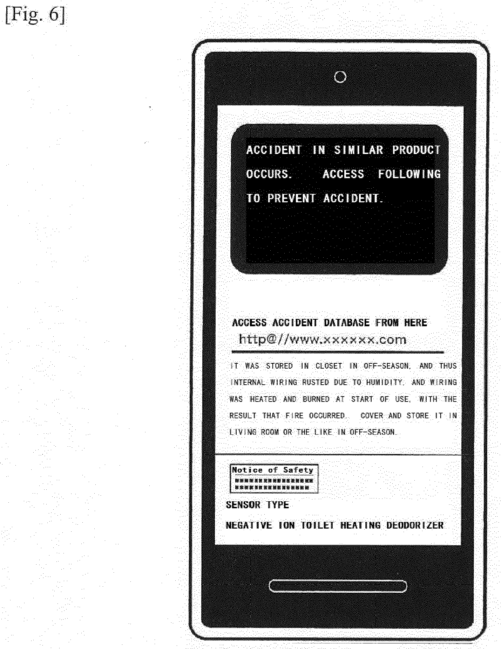

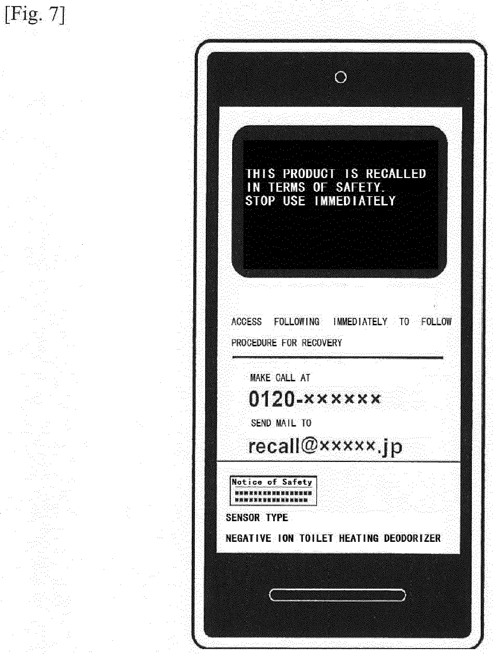

In the first embodiment, as the selection criteria, the following criteria are set.
(1) When urgent safety information is not present, as selection criteria, safety information is selected according to the time elapsed until the life of the electric appliance 201 is exceeded. Specifically, the safety information is selected as follows.
   a. When the user of the communication terminal 110 accesses the information providing server 120 for the first time, a display for making the user safely use the electric appliance 201 is produced. For example, an instruction manual for the electric appliance 201 is displayed, and the user is required to read a description on safety use (see Fig. 3).
   b. When a time necessary for the replacement or the inspection of a component (in particular, which is necessary for the maintenance of safety) in the electric appliance 201 is reached or approached, a display for prompting the user to perform the replacement of the component or the like is produced (see Fig. 4). After the time for the replacement of a component or the like is reached, a display for asking the user to check whether or not the replacement of the component or the like is performed may be produced.
   c. When the end of the life of the electric appliance 201 is approached, a display indicating the information thereof or a display for encouraging the user to buy a new one is produced.
   d. When the life of the electric appliance 201 is exceeded, a display for requiring the user to stop the use is produced (see Fig. 5). This display is preferably kept for a predetermined period after the life of the product is exceeded.
   e. In any case other than a to d described above, information which is specified by the producer is selected. Examples thereof include a guide to purchase a consumable product, a guide to buy an equivalent product and information on the past accidents of similar products (see Fig. 6).
(2) On the other hand, when urgent safety information is present, such urgent safety information which has higher priority than the selection criteria (1) described above is selected. For example, when the electric appliance 201 is recalled by the producer, information (such as information indicating that the recall is performed, a requirement for stopping the use and a contact address for replacement, return and the like) on the recall is displayed (see Fig. 7). Furthermore, when urgency is given, the urgency may be notified to the user by mail or the like.

A method of using the safety management system 100 of the first embodiment will then be described.

A registration party (the producer, the dealer or the like of the electric appliance 201) first registers information on the electric appliance 201 in the information providing server 120. In such registration processing, for example, the followings are registered in the information providing server 120 as registered information: "the country of the owner of the product bland", "the name of the owner of the product bland", "the product name", "the classification of the product in terms of safety criteria", "the model of the product", "the address, the telephone number, the mail address and the home page URL of the registration party", "the URL of safety information (URL identified by the recognition code 203)", "the start month and year of a shipment or sale (in the case of food, day, month and year are preferable; on a product-by-product basis, on a lot-by-lot basis or on a model-by-model basis)", "a time for requiring the replacement of a component (see b described above), a time for providing a warning that the end of the life of the product is approached (see c described above) and a time for providing a warning that the life of the product is exceeded (see d described above)" and "data on other safety information (such as an instruction manual and the safety information displayed in e described above)". The registration processing is preferably performed before the delivery or the sale of the electric appliance 201.

When the registration processing is completed, the distribution of safety data by the information providing server 120 is started.

When the user, for example, purchases the electric appliance 201, as described above, the user reads the recognition code 203 with the communication terminal 110 to access the information providing server 120. In this way, the information providing server 120 provides the safety information to the communication terminal 110 based on the criteria indicated in (1) and (2) described above. The provided safety information is displayed on the display portion 112 of the communication terminal 110. Here, for example, when the safety information is important, the communication terminal 110 may reproduce a sound such as a warning sound.

The information providing server 120 preferably acquires not only the safety information provided by the registration party but also safety information from an accident database or the like operated by an administrative agency or the like. For example, when a part or the whole of the registered information described above is used as a search keyword, it is easy to acquire safety information related to the registration party from the accident database. Then, when the safety information is obtained from the accident database or the like, it is provided as the safety information immediately after it is confirmed with the registration party, and thus it is possible to rapidly provide the safety information. When the safety information acquired from the accident database is provided to the communication terminal 110, the communication terminal 110 may reproduce a sound such as a warning sound or a notification may further be provided to the user by mail or the like.

As described above, in the first embodiment, it is possible to select and provide, based on the predetermined criteria, the safety information (see Figs. 3 to 7) provided from the information providing server 120 to the communication terminal 110 and to appropriately provide the safety information to the user of the electric appliance 201.

Furthermore, since the safety information is selected with consideration given to the time elapsed until the life of the electric appliance 201 is exceeded, various types of safety information for the safety use or the like of the electric appliance 201 can be provided to the user with appropriate timing.

Since the recognition code 203 is used to access the information providing server 120, and thus it is possible to acquire the safety information, even the user who loses the instruction manual and the user who purchases the used product without the attachment of the instruction manual can easily acquire the safety information.

Since in the first embodiment, as the safety information, information on the expiration of the life of the product or on the advance notice thereof is provided, it is effective in avoiding a danger caused by using the electric appliance 201 whose life is exceeded.

Furthermore, since in the first embodiment, as the safety information, information on the time for the replacement of a component of the electric appliance 201, the time for the inspection thereof or the advance notice thereof can be provided, it is effective in avoiding a danger and performance degradation caused by using a replacement component whose life is exceeded.

### List of Reference Symbols

- 100: safety management system
- 110: communication terminal
- 111: optical reading portion
- 112: display portion
- 113: terminal communication portion
- 114: computation processing portion
- 120: information providing server
- 121: server communication portion
- 122: information storage portion
- 123: information providing portion
- 130: Internet
- 201: electric appliance
- 202: product display label
- 203: recognition code

## Claims

1. A safety management system comprising:
an information providing server which provides safety information for safely utilizing a product; and
a communication terminal which allows a user of the product to browse the safety information,
wherein the communication terminal includes:
an address acquisition portion which optically reads a recognition code for the product so as to acquire a web address corresponding to the product;
an information acquisition portion which accesses the information providing server with the web address so as to acquire the safety information; and
a display control portion which displays the safety information on a display portion, and
the information providing server includes:
an information storage portion which stores a plurality of types of the safety information; and
an information providing portion which selects, based on predetermined selection criteria, any of the types of the safety information stored in the information storage portion and which provides the safety information to the communication terminal.

2. The safety management system according to claim 1,
wherein the selection criteria include at least a criterion which is determined according to a time elapsed until a life of the product is exceeded.

3. The safety management system according to claim 2,
wherein the safety information includes information indicating expiration of the life of the product or an advance notice thereof.

4. The safety management system according to claim 2 or 3,
wherein the safety information includes information indicating a time for replacement of a component of the product, a time for inspection thereof or an advance notice thereof.

5. A communication terminal which allows safety information for safely utilizing a product to be browsed by a user of the product, the communication terminal comprising:
an address acquisition portion which optically reads a recognition code for the product so as to acquire a web address corresponding to the product;
an information acquisition portion which accesses an information providing server with the web address so as to acquire the safety information; and
a display control portion which displays the safety information on a display portion,
wherein the safety information is selected based on predetermined selection criteria.

6. The communication terminal according to claim 5,
wherein the selection criteria include at least a criterion which is determined according to a time elapsed until a life of the product is exceeded.

7. The communication terminal according to claim 6,
wherein the safety information includes information indicating expiration of the life of the product or an advance notice thereof.

8. The communication terminal according to claim 6 or 7,
wherein the safety information includes information indicating a time for replacement of a component of the product, a time for inspection thereof or an advance notice thereof.

9. A computer-readable program storage medium in which a computer program that allows safety information for safely utilizing a product to be browsed with a communication terminal by a user of the product is stored,
wherein the computer program makes the computer of the communication terminal execute:
address acquisition processing which makes the communication terminal optically read a recognition code for the product so as to acquire a web address corresponding to the product;
information acquisition processing which makes the communication terminal access an information providing server with the web address so as to acquire the safety information; and
display control processing which displays the safety information on a display portion of the communication terminal, and
the safety information is selected based on predetermined selection criteria.

10. The program storage medium according to claim 9,
wherein the selection criteria include at least a criterion which is determined according to a time elapsed until a life of the product is exceeded.

11. The program storage medium according to claim 10,
wherein the safety information includes information indicating expiration of the life of the product or an advance notice thereof.

12. The program storage medium according to claim 10 or 11,
wherein the safety information includes information indicating a time for replacement of a component of the product, a time for inspection thereof or an advance notice thereof.
